# EUROPEAN PATENT APPLICATION

(11) **EP 4 811 629 A1**
(43) Date of publication of application: **23.09.2026**
(21) Application number: 24927436.6
(22) Date of filing: 19.04.2024
(51) Int. Cl.: H02K 21/24, H02K 7/116, H02K 7/00, H02K 1/28, F16H 1/28, B62M 6/65

(54) **AXIAL MAGNETIC FLUX MOTOR**

(30) Priority: 28.02.2024 KR 20240028739
(71) Applicant: Eflow Co., Ltd., Changwon-si, Gyeongsangnam-do 51541 (KR)
(72) Inventor: YOUN, Su Han, Haman-gun, Gyeongsangnam-do 52043 (KR); CHOI, Seung Ho, Changwon-si, Gyeongsangnam-do 51288 (KR)
(74) Representative: BCKIP Part mbB
(86) International application number: PCT/KR2024/005267
(87) International publication number: WO 2025/183263

(57) **Abstract**

Provided is an axial flux motor including a motor housing defining an internal space, a stator disposed in the internal space of the motor housing and including a stator core, a coil, and a stator bracket, a rotor disposed on one side of the stator to face the stator in an axial direction and including a rotor base plate and a plurality of permanent magnets, and a gear unit disposed on the other side of the stator to face the stator in the axial direction and including a sun gear shaft-coupled to the rotor, a planetary gear meshed with the sun gear, and a ring gear having an inner circumferential surface meshed with the planetary gear.

## Description

### TECHNICAL FIELD

The present invention relates to an axial flux motor, and more particularly, to an axial flux motor in which a rotor and a stator can be disposed in an axial direction.

### BACKGROUND ART

Recently, as the number of vehicles has increased and operating a personal vehicle has become difficult, the number of people using public transportation or movable small mobility devices has been increasing.

As small mobility devices, electric bicycles, electric kickboards, and electric mini bikes are representatively used, and among these, the demand for electric bicycles is increasing.

Such small mobility devices generally have a structure in which a motor is mounted and a wheel is rotated by a rotational force of the motor.

Most motors applied to conventional small mobility devices are radial type motors, and since a radial type motor has a long length in an axial direction, there has been a problem in that, when applied to a small mobility device, the motor portion protrudes and causes inconvenience to a user when getting on and off.

In order to solve the above-described problem, an axial type motor capable of reducing the length in the axial direction has recently been developed.

However, since a conventional axial motor generally has a structure in which a shaft rotates to transmit a rotational force, there is a problem in that a reduction gear separately including gears must be connected. Accordingly, there is a problem in that the overall volume increases, making getting on and off inconvenient and lowering an aesthetic sense.

Under this background, the present inventor has developed a compact axial flux motor in which a gear unit is disposed inside a motor housing so that the housing, rather than a shaft, is rotated to effectively rotate a wheel of a small mobility device, and has completed the present invention by confirming the effects thereof.

### SUMMARY OF THE INVENTION

### TECHNICAL PROBLEM

The present invention has been made to solve the above-described problems, and an object of the present invention is to provide an axial flux motor for a small mobility device in which a gear is disposed inside a motor housing so that the motor housing is rotated by a rotational force of a rotor.

In addition, another object of the present invention is to provide an axial flux motor capable of uniformly providing heights among permanent magnets adhered to a rotor.

The objects of the present invention are not limited to those mentioned above, and other objects not mentioned will be clearly understood by those skilled in the art from the following description.

### TECHNICAL SOLUTION

An axial flux motor according to an embodiment of the present invention includes a motor housing defining an internal space, a stator disposed in the internal space of the motor housing and including a stator core, a coil, and a stator bracket, a rotor disposed on one side of the stator to face the stator in an axial direction and including a rotor base plate and a plurality of permanent magnets, and a gear unit disposed on the other side of the stator to face the stator in the axial direction and including a sun gear shaft-coupled to the rotor, a planetary gear meshed with the sun gear, and a ring gear having an inner circumferential surface meshed with the planetary gear.

In addition, the ring gear may be coupled to the motor housing, so that the motor housing is rotated by power transmission of the gear unit.

In addition, the rotor base plate may have a plurality of magnet coupling grooves, to which the plurality of permanent magnets are coupled, formed in a surface thereof facing the stator.

In addition, the magnet coupling groove may have an adhesive discharge port formed in a surface contacted by the permanent magnet when the permanent magnet is coupled with an adhesive.

In addition, the stator core may be provided in a plurality, the stator bracket may have a guide groove formed along an outer circumferential surface thereof into which the plurality of stator cores are inserted, and the stator core may have a fixing piece formed on one side thereof and inserted into the guide groove.

In addition, the guide groove may have a tapered shape narrowing in width toward an inner side thereof.

In addition, the planetary gear may include a planetary gear rotation shaft, and a bearing rotatably connecting the planetary gear to the planetary gear rotation shaft, and the planetary gear rotation shaft and the bearing may be provided as a pair to prevent the planetary gear from being dislodged.

In addition, the stator may further include a planetary gear base supporting the other side of the planetary gear, one side of the planetary gear being supported by the stator, the planetary gear rotation shaft may include a first planetary gear rotation shaft connecting the stator and the one side of the planetary gear and a second planetary gear rotation shaft connecting the planetary gear base and the other side of the planetary gear, the bearing may include a first bearing connected to the one side of the planetary gear and a second bearing connected to the other side of the planetary gear, the first bearing may have the first planetary gear rotation shaft inserted into a through-hole thereof and an outer circumferential surface inserted into a hollow of the planetary gear, and the second bearing may have the second planetary gear rotation shaft inserted into a through-hole thereof and an outer circumferential surface inserted into the hollow of the planetary gear.

### ADVANTAGEOUS EFFECTS

According to an axial flux motor for a small mobility device according to an embodiment of the present invention, the entire housing of the motor is rotated to effectively rotate a wheel of a small mobility device.

In addition, according to an axial flux motor according to an embodiment of the present invention, an adhesive discharge port is formed in a groove to which a permanent magnet is coupled, so that heights among permanent magnets can be uniformly provided, thereby providing an effect of improving rotational efficiency.

The effects of the present invention are not limited to the effects described above, and effects not mentioned will be clearly understood by those skilled in the art to which the present invention pertains from the present specification and the accompanying drawings.

### BRIEF DESCRIPTION OF DRAWINGS

FIG. 1 is a perspective view of an axial flux motor according to an embodiment of the present invention.
FIG. 2 is an exploded perspective view of the axial flux motor according to an embodiment of the present invention.
FIG. 3 is an exploded perspective view of the stator and the gear unit included in the axial flux motor of FIG. 1.
FIG. 4 is a front view of the stator included in the axial flux motor of FIG. 1.
FIG. 5 is a perspective view of the rotor included in the axial flux motor of FIG. 1.
FIGS. 6 and 7 are views schematically illustrating a portion of the gear unit according to an embodiment of the present invention.
FIG. 8 is a cross-sectional view illustrating an exploded state of the axial flux motor according to an embodiment of the present invention.

### DETAILED DESCRIPTION

The embodiments described in the present specification and the configurations illustrated in the drawings are merely preferred examples of the disclosed invention, and at the time of filing of the present application, there may be various modifications that can replace the embodiments and drawings of the present specification.

The same reference numerals or symbols presented in each drawing of the present specification indicate parts or components that perform substantially the same functions. The shapes and sizes of elements in the drawings may be exaggerated for clear explanation.

The terms used in the present specification are used to describe embodiments and are not intended to limit and/or restrict the disclosed invention. Singular expressions include plural expressions unless the context clearly indicates otherwise. In the present specification, terms such as "include" or "have" are intended to designate the presence of features, numbers, steps, operations, components, parts, or combinations thereof described in the specification, and do not preclude the possibility of the presence or addition of one or more other features, numbers, steps, operations, components, parts, or combinations thereof.

Terms including ordinal numbers such as "first" and "second" used in the present specification may be used to describe various components, but the components are not limited by the terms, and the terms are used only for the purpose of distinguishing one component from another component. For example, without departing from the scope of the present invention, a first component may be named a second component, and similarly, a second component may also be named a first component.

Hereinafter, an axial flux motor according to an embodiment of the present invention will be described in detail with reference to the drawings.

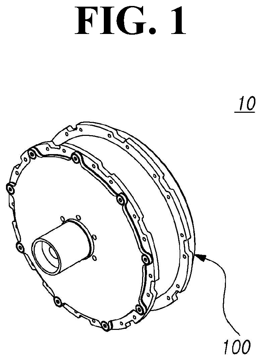

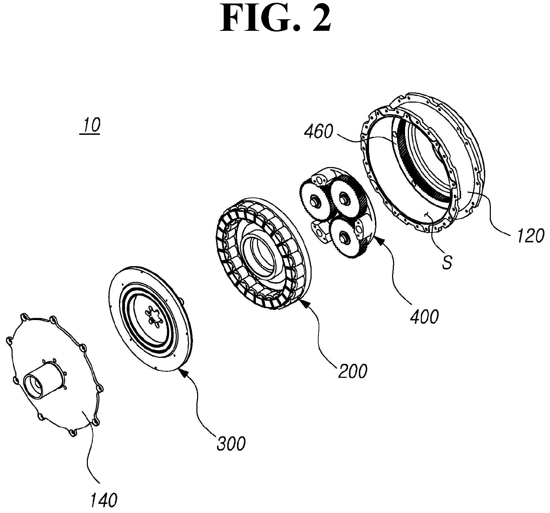

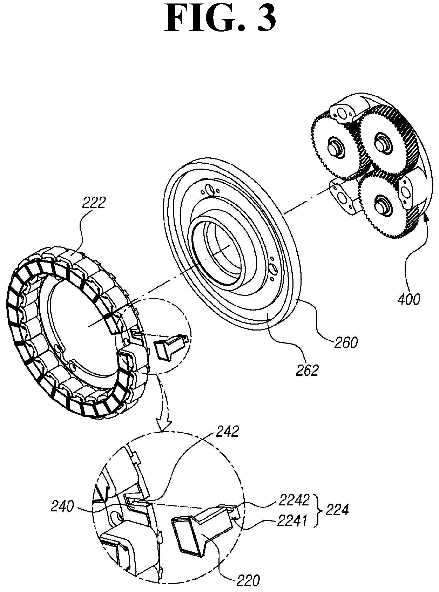

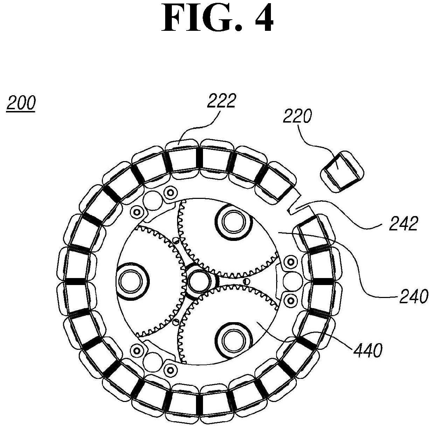

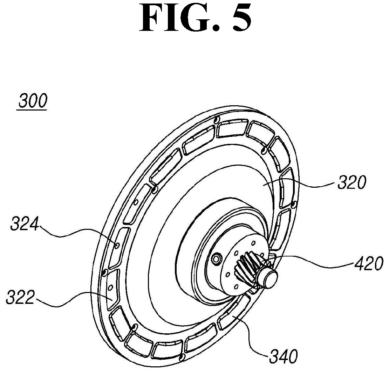

FIG. 1 is a perspective view of an axial flux motor according to an embodiment of the present invention, FIG. 2 is an exploded perspective view of the axial flux motor according to an embodiment of the present invention, FIG. 3 is an exploded perspective view of the stator and the gear unit included in the axial flux motor of FIG. 1, FIG. 4 is a front view of the stator included in the axial flux motor of FIG. 1, FIG. 5 is a perspective view of the rotor included in the axial flux motor of FIG. 1, and FIGS. 6 and 7 are views schematically illustrating a portion of the gear unit according to an embodiment of the present invention.

Referring to FIGS. 1 and 2, an axial flux motor 10 includes a motor housing 100, a stator 200, a rotor 300, and a gear unit 400.

The motor housing 100 has an internal space S formed therein, in which the stator 200 and the rotor 300, which will be described later, are provided. The motor housing 100 may include an upper casing 120 and a lower casing 140.

The upper casing 120 has the internal space S formed therein. The upper casing 120 has a through-hole formed in an axial direction.

The lower casing 140 may be implemented in a circular plate shape. The lower casing 140 may be coupled to the upper casing 120 to close an opening of the upper casing 120, thereby closing the internal space of the upper casing 120.

The stator 200 is disposed in the internal space of the upper casing 120. As illustrated in FIG. 3, the stator 200 includes a stator core 220, a coil 222, a stator bracket 240, and a stator holder 260.

A plurality of stator cores 220 may be provided. The stator cores 220 may be disposed to be spaced apart at predetermined intervals along a circumferential direction from a center.

The coil 222 may be wound around an outer surface of each stator core 220 so as to generate magnetic flux in the axial direction.

The stator bracket 240 fixes the stator core 220. The stator bracket 240 may be formed of an insulator. The stator bracket 240 may be provided in a disc shape. The stator bracket 240 may have a hollow formed in the axial direction. The stator bracket 240 may have a guide groove 242 formed therein, into which the stator core 220 is inserted. The guide grooves 242 may be formed in a number corresponding to the stator cores 220. The guide groove 242 may have a shape recessed from an outer side toward a center to guide insertion of the stator core 220.

The guide grooves 242 may be formed along an outer circumferential surface of the stator bracket 240. The guide groove 242 may be provided in a tapered shape. For example, as illustrated in FIG. 4, the guide groove 242 may be provided in a tapered shape whose width narrows toward the center.

In this case, the stator core 220 has a fixing piece 224 formed on one side thereof and shaped to be inserted into the guide groove 242. The fixing piece 224 may be formed in a "T" shape. The fixing piece 224 may be formed integrally with the stator core 220. The fixing piece 224 includes an insertion portion 2241 and a fixing portion 2242.

One side of the insertion portion 2241 is coupled to the stator core 220. The insertion portion 2241 may be formed in a shape corresponding to the guide groove 242.

The fixing portion 2242 is coupled to the other side of the insertion portion 2241. The fixing portion 2242 may be formed to have a larger area than the insertion portion 2241.

Accordingly, since the insertion portion 2241 and the fixing portion 2242 are combined to have a "T" shape, the stator core 220 is inserted along the guide groove 242 of the stator bracket 240 by the insertion portion 2241, while the fixing portion 2242 supports and fixes the stator core 220 at the other side of the stator bracket 240.

The stator holder 260 is provided in a cylindrical shape having a hollow formed in the axial direction. The stator holder 260 may have a bracket groove 262 formed therein, into which the stator bracket 240 is inserted in the axial direction. The bracket groove 262 may have an inner circumferential surface formed in a size corresponding to an outer circumferential surface of the stator bracket 240.

Accordingly, the fixing piece 224 of the stator core 220 is coupled to the guide groove 242 formed in the stator bracket 240, and the stator holder 260 is coupled to surround an outer side of the stator bracket 240, thereby preventing the stator core 220 from being dislodged.

The rotor 300 is disposed on one side of the stator 200. When power is supplied to the stator 200, the rotor 300 rotates by interacting with the stator 200. The rotor 300 is disposed to face the stator 200 in the axial direction. The rotor 300 includes a rotor base plate 320 and a permanent magnet 340.

As illustrated in FIG. 5, the rotor base plate 320 may be provided in a disc shape. The rotor base plate 320 is disposed to face the stator 200. Specifically, the rotor base plate 320 may be disposed in a direction in which the stator core 220 is coupled. The rotor base plate 320 has a magnet coupling groove 322 formed therein, to which the permanent magnet 340, which will be described later, is coupled.

A plurality of magnet coupling grooves 322 may be formed. The magnet coupling grooves 322 may be formed along a circumferential direction of the rotor base plate 320. The magnet coupling groove 322 may be formed at a position facing an upper portion of the stator core 220.

The permanent magnet 340 is coupled to the magnet coupling groove 322 with an adhesive. However, since it is difficult to apply the adhesive in an equal amount between the rotor base plate 320 and the permanent magnet 340, a height difference occurs among the coupled permanent magnets 340, thereby lowering rotational efficiency. Accordingly, the magnet coupling groove 322 may have an adhesive discharge port 324 formed therein to discharge excess adhesive when the permanent magnet 340 is coupled.

The permanent magnet 340 is inserted into the magnet coupling groove 322 and coupled to the rotor base plate 320. A plurality of permanent magnets 340 are provided. The permanent magnets 340 may be disposed such that N poles and S poles are alternately exposed. When an odd number of permanent magnets 340 are provided, a pair among the plurality of permanent magnets is disposed with the same pole, and thus the permanent magnets 340 should be provided in an even number.

Accordingly, even when the amount of adhesive is irregularly applied to the magnet coupling groove 322, the excess adhesive is discharged through the adhesive discharge port 324 when the permanent magnet 340 is coupled, so that a height deviation among the permanent magnets 340 is minimized and the air gap can be made uniform, thereby providing an effect of improving rotational efficiency.

The gear unit 400 transmits a rotational force of the rotor 300 to the motor housing 100 through a reduction ratio. The gear unit 400 includes a sun gear 420, a planetary gear 440, and a ring gear 460.

The sun gear 420 is coupled to one surface of the rotor 300 and is rotated by rotation of the rotor 300. As illustrated in FIG. 5, the sun gear 420 may be coupled to the surface of the rotor base plate 320 on which the plurality of permanent magnets 340 are coupled, and may pass through the hollow of the stator holder 260.

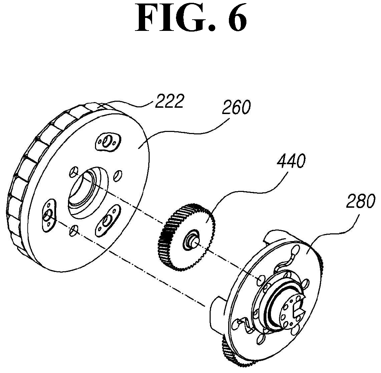

The planetary gear 440 is meshed with the sun gear 420 and is rotated by rotation of the sun gear 420. The planetary gear 440 is coupled to one surface of the stator 200. For example, as illustrated in FIG. 6, the planetary gear 440 may be coupled to one surface of the stator holder 260. Specifically, the planetary gear 440 may be coupled to one surface of the stator holder 260 facing a planetary gear base 280, which will be described later.

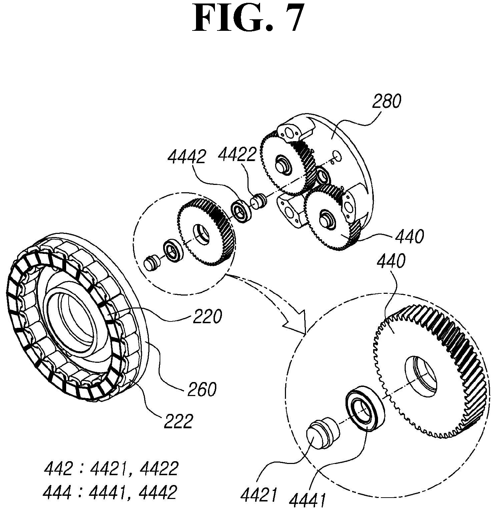

A plurality of planetary gears 440 may be provided. For example, as illustrated in FIG. 7, three planetary gears 440 may be formed, but the number is not limited thereto. The planetary gears 440 may be disposed at an equal distance from a center of the planetary gear base 280. The plurality of planetary gears 440 may be disposed at equal intervals.

The planetary gear 440 has a hollow formed at a center thereof in the axial direction. The planetary gear 440 is connected to the stator holder 260 by a planetary gear rotation shaft 442. Specifically, the planetary gear 440 may be connected to the planetary gear rotation shaft 442 by a bearing 444.

A plurality of planetary gear rotation shafts 442 and a plurality of bearings 444 may be provided to prevent the planetary gear 440 from being dislodged. For example, two planetary gear rotation shafts 442 and two bearings 444 may be respectively provided to support both sides of the planetary gear 440.

The planetary gear rotation shaft 442 includes a first planetary gear rotation shaft 4421 and a second planetary gear rotation shaft 4422. One side of the first planetary gear rotation shaft 4421 is connected to the stator holder 260, and the other side thereof is connected to the planetary gear 440. One side of the second planetary gear rotation shaft 4422 is connected to the planetary gear base 280, and the other side thereof is connected to the planetary gear 440.

The bearing 444 includes a first bearing 4441 and a second bearing 4442. The first bearing 4441 rotatably connects the planetary gear 440 to the first planetary gear rotation shaft 4421. Specifically, the first planetary gear rotation shaft 4421 is inserted into a through-hole of the first bearing 4441, and an outer circumferential surface of the first bearing 4441 is inserted into the hollow of the planetary gear 440. The second bearing 4442 rotatably connects the planetary gear 440 to the second planetary gear rotation shaft 4422. Specifically, the second planetary gear rotation shaft 4422 is inserted into a through-hole of the second bearing 4442, and an outer circumferential surface of the second bearing 4442 is inserted into the hollow of the planetary gear 440.

The planetary gear base 280 may be coupled to the stator holder 260 by a bolt. The stator holder 260 and the planetary gear base 280 may have grooves formed in surfaces facing each other, to which the first planetary gear rotation shaft 4421 and the second planetary gear rotation shaft 4422 are respectively fixed.

Accordingly, since the planetary gear rotation shaft and the bearing are provided in plurality, shaft bending can be reduced compared to a case where they are provided as a single one to support the planetary gear 440 from only one side, thereby providing an effect of improving rotational efficiency.

The ring gear 460 is meshed with the planetary gear 440 and is rotated by rotation of the planetary gear 440. The ring gear 460 may have a gear formed on an inner circumferential surface thereof so as to be externally meshed with the plurality of planetary gears 440. The ring gear 460 is coupled to an inside of the upper casing 120.

According to the above-described gear unit 400, when AC power is applied to the stator 200, the rotor 300 is rotated by the permanent magnet 340 coupled to the rotor base plate 320, the sun gear 420 coupled to the rotor 300 is rotated, the plurality of planetary gears 440 coupled to one surface of the stator 200 and gear-connected to the sun gear 420 are rotated, and the ring gear 460 fixedly coupled to the inside of the upper casing 120 and gear-connected to the plurality of planetary gears 440 is rotated, whereby the motor housing 100 can be rotated.

Hereinafter, a coupling relationship among the motor housing 100, the stator 200, the rotor 300, and the gear unit 400 will be described.

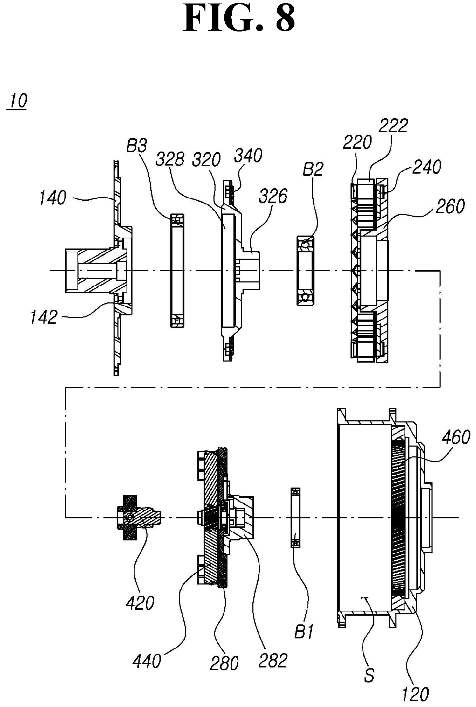

FIG. 8 is a cross-sectional view illustrating an exploded state of the axial flux motor according to an embodiment of the present invention. Referring to FIG. 8, first, the stator 200 has a stator fixing shaft 282 formed on one surface thereof, and is supported and fixed by passing through the upper casing 120. Specifically, the planetary gear base 280 coupled to the stator holder 260 has the stator fixing shaft 282 formed on a surface opposite to a surface on which the planetary gear 440 is coupled. In this case, the stator 200 is inserted into the internal space S of the upper casing 120, and the stator fixing shaft 282 passes through the through-hole formed in the upper casing 120 to be supported and fixed.

Next, the upper casing 120 is rotatably coupled to the stator 200. Specifically, a bearing B1 is inserted between the stator fixing shaft 282 and the through-hole, so that the upper casing 120 is rotatably coupled with respect to the stator 200. In addition, the ring gear 460 coupled to the inside of the upper casing 120 is externally coupled to the planetary gear 440 coupled to the stator holder 260 and the planetary gear base 280.

Next, the rotor 300 is coupled to the stator 200. Specifically, the rotor base plate 320 has a rotor fixing shaft 326 formed in a direction facing the stator 200. The rotor fixing shaft 326 is inserted into and coupled to the hollow formed in the stator holder 260. A bearing B2 is inserted between the rotor fixing shaft 326 and the hollow of the stator holder 260, so that the rotor 300 is rotatably coupled.

Next, the lower casing 140 is fixedly coupled to the upper casing 120. Specifically, the lower casing 140 is coupled to a through-hole, among the through-holes of the upper casing 120, to which the stator 200 is not coupled. The lower casing 140 may be coupled to the other side of the rotor 300, one side of which is rotatably coupled to the stator 200. The lower casing 140 may have a protrusion 142 formed on a surface facing the rotor 300 to support the rotor 300. In this case, the rotor 300 may have a groove portion 328 formed on a surface facing the lower casing 140 and corresponding to the protrusion 142 of the lower casing 140. A bearing B3 is inserted between the protrusion 142 and the groove portion 328, so that the other side of the rotor 300 is rotatably coupled with respect to the lower casing 140.

According to the above-described example, in the axial flux motor according to an embodiment of the present invention, the rotor 300 is disposed on one side of the stator 200 and the gear unit 400 is disposed on the other side, so that the weight can be distributed more evenly than when the rotor 300 and the gear unit 400 are disposed only on one side of the stator 200, thereby providing an effect of reducing bending of the shaft.

In addition, in general, lubricating oil is applied to the gear unit to prevent wear of the gears and to lubricate them. When the gear unit and the rotor are disposed in the same direction, a problem occurs in that the lubricating oil applied to the gear unit contaminates the rotor. However, in the present invention, the rotor 300 is disposed on one side of the stator 200 and the gear unit 400 is disposed on the other side of the stator 200, thereby providing an effect of preventing the rotor 300 from being contaminated by the lubricating oil applied to the gear unit 400.

In the above description, even though all components constituting the embodiments of the present invention have been described as being combined into one or operating in combination, the present invention is not necessarily limited to such embodiments. That is, within the scope of the object of the present invention, all of the components may be selectively combined into one or more and operate. In addition, terms such as "include," "comprise," or "have" described above mean that the corresponding component may be inherent unless there is a description to the contrary, and thus should be interpreted as being able to further include other components rather than excluding other components. All terms, including technical or scientific terms, have the same meaning as commonly understood by a person of ordinary skill in the art to which the present invention belongs, unless otherwise defined. Commonly used terms, such as those defined in a dictionary, should be interpreted as having a meaning consistent with the contextual meaning of the related art, and are not to be interpreted in an ideal or excessively formal sense unless explicitly defined in the present invention.

The above description is merely illustrative of the technical idea of the present invention, and various modifications and variations will be possible by those skilled in the art to which the present invention belongs without departing from the essential characteristics of the present invention. Therefore, the embodiments disclosed in the present invention are not intended to limit the technical idea of the present invention but to describe it, and the scope of the technical idea of the present invention is not limited by these embodiments. The protection scope of the present invention should be interpreted by the claims below, and all technical ideas within the equivalent scope thereof should be interpreted as being included in the scope of rights of the present invention.

## Claims

1. An axial flux motor comprising:
a motor housing defining an internal space;
a stator disposed in the internal space of the motor housing and including a stator core, a coil, and a stator bracket;
a rotor disposed on one side of the stator to face the stator in an axial direction, the rotor including a rotor base plate and a plurality of permanent magnets; and
a gear unit disposed on the other side of the stator to face the stator in the axial direction, the gear unit including a sun gear shaft-coupled to the rotor, a planetary gear meshed with the sun gear, and a ring gear having an inner circumferential surface meshed with the planetary gear.

2. The axial flux motor of claim 1, wherein the ring gear is coupled to the motor housing, and the motor housing is rotated by power transmission of the gear unit.

3. The axial flux motor of claim 1, wherein the rotor base plate has a plurality of magnet coupling grooves, to which the plurality of permanent magnets are coupled, formed in a surface of the rotor base plate facing the stator.

4. The axial flux motor of claim 3, wherein the magnet coupling groove has an adhesive discharge port formed in a surface contacted by the permanent magnet when the permanent magnet is coupled with an adhesive.

5. The axial flux motor of claim 1, wherein:
the stator core is provided in a plurality;
the stator bracket has a guide groove formed along an outer circumferential surface thereof, the plurality of stator cores being inserted into the guide groove; and
the stator core has a fixing piece formed on one side thereof, the fixing piece being inserted into the guide groove.

6. The axial flux motor of claim 5, wherein the guide groove has a tapered shape narrowing in width toward an inner side thereof.

7. The axial flux motor of claim 1, wherein:
the planetary gear comprises a planetary gear rotation shaft, and a bearing rotatably connecting the planetary gear to the planetary gear rotation shaft; and
the planetary gear rotation shaft and the bearing are provided as a pair to prevent the planetary gear from being dislodged.

8. The axial flux motor of claim 7, wherein:
the stator further comprises a planetary gear base supporting the other side of the planetary gear, one side of the planetary gear being supported by the stator;
the planetary gear rotation shaft comprises a first planetary gear rotation shaft connecting the stator and the one side of the planetary gear, and a second planetary gear rotation shaft connecting the planetary gear base and the other side of the planetary gear;
the bearing comprises a first bearing connected to the one side of the planetary gear, and a second bearing connected to the other side of the planetary gear;
the first bearing has the first planetary gear rotation shaft inserted into a through-hole thereof, and has an outer circumferential surface inserted into a hollow of the planetary gear; and
the second bearing has the second planetary gear rotation shaft inserted into a through-hole thereof, and has an outer circumferential surface inserted into the hollow of the planetary gear.
